# EUROPÄISCHE PATENTSCHRIFT

(11) **EP 4 132 315 B1**
(45) Veröffentlichungstag und Bekanntmachung des Hinweises auf die Patenterteilung: **15.05.2024**
(21) Anmeldenummer: 21815492.0
(22) Anmeldetag: 19.11.2021
(51) Int. Cl.: A44B 18/00, B29C 43/22, B29C 43/46, B29C 48/08, B29C 48/35

(54) **VERSCHLUSSTEIL**
FASTENER PART
PARTIE DE FERMETURE

(30) Priorität: 11.12.2020 DE 102020007585
(43) Veröffentlichungstag der Anmeldung: 15.02.2023
(73) Patentinhaber: Gottlieb Binder GmbH & Co. KG, 71088 Holzgerlingen (DE)
(72) Erfinder: HEEPE, Lars, 72072 Tübingen (DE)
(74) Vertreter: Kohler Schmid Möbus Patentanwälte
(86) Internationale Anmeldenummer: PCT/EP2021/082285
(87) Internationale Veröffentlichungsnummer: WO 2022/122345

(56) Entgegenhaltungen:
- WO-A1-00/00053
- DE-A1- 10 039 937
- DE-B4-102004 058 257

## Beschreibung

Die Erfindung betrifft ein Verschlussteil bestehend aus zumindest einem flächenförmig ausgebildeten Trägerteil, auf dessen einer Seite eine Vielzahl von pilzkopfartigen Verschlusselementen angeordnet ist gemäß der Merkmalsausgestaltung des Oberbegriffes des Patentanspruches 1.

Durch DE 100 39 937 A1 ist ein Verfahren zum Herstellen dahingehender Verschlussteile respektive Haftverschlussteile bekannt. Das bekannte Haftverschlussteil ist mit einer Vielzahl von einstückig mit einem Träger verbundenen und symmetrisch aufgebauten Verhakungsmitteln in Form jeweils eines mit einem Kopfteil versehenen Stielteils versehen, wobei zum Durchführen des Herstellverfahrens ein formbarer Werkstoff in eine Formgebungszone zwischen einem Druckwerkzeug und einem Formwerkzeug zugeführt wird. Dadurch, dass bei der bekannten Lösung zumindest in einem Längsschnitt des jeweiligen Formhohlraumes gesehen, die einander gegenüberliegenden Begrenzungswände durchgehend mit einem konvexen Bahnverlauf versehen werden, ist ein stetig verlaufender Übergang zwischen den Querschnittsformen von Stielteil und Kopfteil für jeweils ein Verhakungsmittel des Trägers erreicht, so dass es zu einem hemmnisfreien Entformungsprozess kommen kann. Dieses Dokument offenbart einen Verschlussteil mit den Merkmalen des Oberbegriffs des Anspruchs 1.

Frühere Verschlussteillösungen mit weitgehend geradlinig verlaufendem Stielteil sind Gegenstand weiterer Veröffentlichungen, wie DE 196 46 318 A1.

Ausgehend von diesem Stand der Technik liegt der Erfindung die Aufgabe zugrunde, die bekannten Lösungen dahingehend weiter zu verbessern, dass ein Verschlussteil mit größerer Funktionalität und erweiterten Anwendungsbereichen geschaffen ist.

Eine dahingehende Aufgabe löst ein Verschlussteil mit den Merkmalen des Patentanspruches 1 in seiner Gesamtheit. Dadurch, dass gemäß dem kennzeichnenden Teil des Patentanspruches 1 auf der den Verschlusselementen gegenüberliegenden weiteren Seite des Trägerteils eine Vielzahl weiterer kraterartiger Vertiefungen eingebracht ist, dass die beiden kraterartigen Vertiefungen zumindest bei einem Teil der Verschlusselemente konzentrisch oder im Wesentlichen konzentrisch zur Längsachse des jeweils zugeordneten Stielteils verlaufen, und dass die jeweilige weitere kraterartige Vertiefung eine maximale Kratertiefe aufweist, die zwischen 30-60%, vorzugsweise bei 50%, der Dicke des Trägerteils liegt, ist gegenüber den ansonsten eben verlaufenden Seiten des Trägerteils eine zusätzliche Funktionalität geschaffen, die auch zu erweiterten Anwendungsbereichen für solche Verschlussteile führt.

So führen zunächst die weiteren kraterartigen Vertiefungen im rückwärtigen Bereich des Trägerteils zu einer ausgeprägten Gewichtsreduzierung, wobei Grammaturen (Masse/Flächeneinheit in g/m²) in der Größenordnung von Normalpapier für Kopierer und Drucker erreicht werden können; also Werte < 80g/ m². Da Verschlussteile der in Rede stehenden Art Massenware sind und beispielsweise als Rollenware mit tausenden von Quadratmetern an ihren jeweiligen Einsatzort (Automobilindustrie, Windelindustrie, Bekleidungsindustrie, etc.) verschickt werden müssen, lassen sich dergestalt in relevantem Umfang Transportkosten einsparen, ohne die technische Eigenschaft solcher Verschlussteile zu beeinträchtigen, die darin besteht, mit einer Schlingen- oder Schlaufenware eines Drittbauteils einen immer wiederlösbaren Haftverschluss zu bilden, der fachsprachlich auch mit Kletten^{®}-Haftverschluss bezeichnet selbst bei Endverbraucherkreisen bekannt ist. Hierzu trägt auch die Gewichtsreduzierung durch die kopfseitige kraterartige Vertiefung in der Art einer Mulde mit bei.

Die angesprochenen weiteren kraterartigen Vertiefungen im Trägerteil dienen insoweit aber nicht nur der Gewichtsreduzierung, sondern insgesamt wird eben weniger Kunststoffmaterial benötigt, um ein Verschlussteil unter Einsatz bekannter Herstellverfahren (Chill-Roll-Verfahren) herstellen zu können, was Kosten sparen hilft und die Umwelt entlastet.

Darüber hinaus hat es sich gezeigt, dass solche Trägerteile von Verschlussteilen mit weiteren kraterartigen respektive dellenartigen Vertiefungen eine geringere Biegesteifigkeit aufweisen als die bekannten Verschlussteile, wie sie beispielhaft nach der Lehre der DE 100 39 937 A1 hergestellt sind. Dies spielt insbesondere dann eine Rolle bei sogenannten "Software"-Lösungen, bei denen solche Verschlussteile für Inkontinenzwindeln respektive Babywindeln zum Einsatz kommen, die als Funktionalität gegenüber dem jeweiligen Träger mit ihrer Anschmiegsamkeit einen erhöhten Komfort bieten sollen.

Darüber hinaus bilden die jeweiligen weiteren kraterartigen Vertiefungen aber auch die Möglichkeit Sammelräume respektive Reservoirs auszubilden, beispielsweise für die Aufnahme von Klebstoffen, die benötigt werden um das jeweilige Verschlussteil später einmal an seinem Einsatzort an einem Drittbauteil anbringen zu können. Bei den bekannten Lösungen musste das Verschlussteil auf der Rückseite des Trägerteils immer mehr oder minder vollständig mit einer Klebstoffauftragsschicht flächig versehen werden, was zum einen die Einsatzmengen an benötigtem Klebstoff erhöht und mithin auch die Gesamtproduktkosten und zum anderen konnte es auch ungewollt zu einem Ablösen der klebenden Auftragsschicht kommen, was mit der vorliegenden erfindungsgemäßen Lösung vermieden ist, da der Klebstoffeintrag durch die jeweilige weitere kraterartige Vertiefung weitgehend geschützt ist. Ferner besteht die verbesserte Möglichkeit, wie beispielhaft in der DE 10 2004 058 257 B4 aufgezeigt ist, mehrere folienartige Kunststoffbahnen für das Haftverschlussteil rückwärtig übereinander zu legen, wobei die außenliegende Trägerschicht in die innenliegende Trägerschicht über die weiteren kraterartigen Vertiefungen "verhakt" werden kann, so dass eine verbesserte Anhaftung von übereinanderliegenden folienartigen Trägerbahnen oder Trägerschichten für ein Verschlussprodukt erreicht ist.

Bei dem erfindungsgemäßen Verschlussteil ist vorgesehen, dass die jeweilige weitere kraterartige Vertiefung eine maximale Kratertiefe aufweist, die zwischen 30 bis 60%, vorzugsweise bei 50% der Dicke des Trägerteils liegt. Insbesondere bei der dahingehenden Wanddickenauswahl für das Trägerteil stellen sich harmonische kraterartige Verläufe für die jeweilige weitere kraterartige Vertiefung im Trägerteil ein.

Die jeweilige weitere kraterartige Vertiefung mit ihrem Kratergrund und ihrem sonstigen Kraterverlauf verläuft im Wesentlichen konzentrisch zu einem Stielteil des jeweils pilzkopfartig ausgebildeten Verschlusselementes, das benachbart gegenüberliegend zu dieser Vertiefung auf dem Trägerteil vorstehend mit diesem einstückig verbunden ist. Hierdurch entsteht im Querschnitt gesehen eine Art Brückenkonstruktion auf der sich das Verschlusselement abstützen kann, so dass in Belastungsrichtungen auf das Verschlusselement in Längsausrichtung zum zugeordneten Stielteil gesehen sich erhöhte Abstützkräfte ergeben, was die Verschlusscharakteristik des Verschlussteils verbessert. Vorzugsweise ist dabei vorgesehen, dass jedem Verschlusselement zugeordnet eine Vertiefung vorhanden ist und dass alle Verschlusselemente gleich ausgebildet sind, ebenso wie alle Vertiefungen zueinander. Dergestalt ist ein regelmäßiger Aufbau für das jeweilige Verschlussteil als Ganzes erreicht, mit insoweit weitgehender Symmetrieausbildung entlang der Längs- und Querachsen des Verschlussteils.

Wie dargelegt, ist also mit der angesprochenen neuen Generation von Verschlussteilen die Funktionalität erhöht, ebenso wie die möglichen Anwendungsgebiete für derartig konzipierte Verschlussteile mit krater- oder dellenartigen Vertiefungen auf der Rückseite. Die weiteren kraterartigen Vertiefungen lassen sich in das Trägerteil von außen her ohne Weiteres mechanisch einbringen, beispielsweise indem man die an einer zusätzlichen Formwalze angeordneten Vorsprünge in den rückwärtigen Bereich des noch plastifizierten Trägerteils eindringen lässt um dort im Kunststoffmaterial und dieses verdichtend die weiteren kraterartigen Vertiefungen einzubringen. Eine andere Herstellmöglichkeit besteht darin, durch einen düsenartigen Fluidauftrag mit hohem Druck (Wasser, Luft, etc.) das Material im rückwärtigen Bereich des Trägerteils zu verdrängen, bei gleichzeitiger Herstellung der genannten Vertiefungen. Bei den dahingehenden Herstellverfahren kommt es aber letztendlich nicht zu einer Reduzierung der Grammatur für das jeweilige Verschlussteil, da das Kunststoffmaterial grundsätzlich nur verdrängt und aus dem Verschlussteil selbst nicht entfernt wird. Demgegenüber besteht die Möglichkeit im Rahmen von Ätzverfahren, wie man sie von der Mikro-Galvanik her kennt, das Kunststoffmaterial rückwärtig im Trägerteil abzutragen, um so die jeweilige weitere kraterartige Vertiefung zu schaffen. Durch Wegnahme des Kunststoffmaterials ist insoweit die Grammatur des Verschlussteils dann reduziert.

Für einen Durchschnittsfachmann auf dem Gebiet der Haftverschlusstechnologie ist es jedoch überraschend, dass er bei geeigneter Steuerung des Herstellprozesses, die weiteren kraterartigen Vertiefungen, vorzugsweise gegenüberliegend der jeweiligen pilzkopfartigen Struktur, im Trägerteil erzeugen kann. So kann ein Entformungsprozess an einer Formwalze mit den Kavitäten für Stiel- und Kopfteile derart gesteuert werden, dass beim Herausziehen des dahingehenden Verschlussmaterials, sich beim Entformen des Verschlussteils in der jeweiligen Kavität der Formwalze ein Widerstand dergestalt aufbaut, dass das darunterliegende Kunststoffmaterial kraterartig eingezogen wird, so dass die jeweiligen weiteren krater- oder dellenartigen Vertiefungen im Trägerteil rückwärtig quasi-automatisch beim Formgebungsprozess mit entstehen. Dies hat so keine Entsprechung im Stand der Technik.

Bei einer bevorzugten Ausführungsform des erfindungsgemäßen Verschlussteils ist vorgesehen, dass die jeweilige weitere kraterartige Vertiefung ausgehend von der eben verlaufenden, weiteren Seite des Trägerteils von dort überstandsfrei stetig bis zum Kratergrund verläuft. Da insoweit bei der Herstellung des Verschlussteils kein überstehender Kraterrand entsteht, ist die Weiterverabeitbarkeit für das Verschlussteil auch nicht beeinträchtigt.

Bei einer weiteren bevorzugten Ausführungsform des erfindungsgemäßen Verschlussteils ist vorgesehen, dass die jeweilige weitere kraterartige Vertiefung idealisiert in einem Längsquerschnitt gesehen, ausgehend von der weiteren Seite des Trägerteils von einem konvexen in einen konkaven Krümmungsverlauf in Richtung des Kratergrundes übergeht. Dergestalt entsteht ein harmonischer Krümmungsverlauf in der Art einer Sinus- oder Kosinuskurve mit geringen Materialspannungen entlang der Kraterausbildung. Als besonders vorteilhaft hat es sich dabei erwiesen, dass der konkave mittige Krümmungsverlauf Verlauf weniger stark gekrümmt ist, denn der sich anschließende randseitige konvexe Verlauf.

Bei einer weiteren bevorzugten Ausführungsform des erfindungsgemäßen Verschlussteils ist vorgesehen, dass die jeweilige weitere kraterartige Vertiefung in einer Längsrichtung des Trägerteils gesehen, die der Herstellrichtung entspricht, wiederum in Längsquerschnitt gesehen auf einer Seite flacher in Richtung der weiteren Seite des Trägerteils ausläuft als auf der gegenüberliegenden Querschnittsseite. Die dahingehende Kraterausbildung ergibt sich im Rahmen des Entformungsprozesses für das jeweilige Verschlusselement aus der Formwalze, was dem hemmnisfreien Entformungsprozess zugute kommt.

Bei einer weiteren bevorzugten Ausführungsform des erfindungsgemäßen Verschlussteils ist vorgesehen, dass das jeweilige Stielteil eines Verschlusselementes zumindest an seiner fußseitigen Übergangsstelle zum Trägerteil den gleichförmig verlaufenden Rotationskörper ausbildet, die eine geringere Krümmung aufweist als der Übergang des Stielteils zur kopfseitigen Verbreiterung mit den Verhakungsstellen des Verschlusselementes und dass der Krümmungsverlauf an jeder Stelle der benachbart gegenüberliegenden Vertiefungen eine geringere Krümmung aufweist als die Krümmung betreffend den kopfseitigen Krümmungsverlauf des Stielteils. Dergestalt ist eine Kompromiss geschaffen zwischen dem hemmnisfreien Ausformen des jeweiligen Verschlusselementes aus dem Formwerkzeug und der zeitgleich stattfindenden Vertiefungsbildung für den jeweiligen weiteren Krater des Trägerteils.

Bei einer weiteren bevorzugten Ausführungsform des erfindungsgemäßen Verschlussteils ist vorgesehen, dass der größte Durchmesser weiteren kraterartigen der Vertiefung an der Stelle des Auslaufs zur weiteren Seite des Trägerteils größer bemessen ist als der Durchmesser des Stielteils an jeder Stelle zwischen seiner Fuß- und seiner Kopfseite, vorzugsweise größer ist als die Ausdehnung des Kopfteiles an seiner breitesten Stelle. Dadurch ist zum einen eine gute Verhakungsmöglichkeit mittels des jeweiligen Kopfteiles geschaffen, bei gleichzeitig guter Abstützung durch den brückenartigen Übergang von der ebenen Unterseite des Trägerteils in Richtung des Kratergrundes.

Im Folgenden wird das erfindungsgemäße Verschlussteil unter Einbezug von Erläuterungen zu seiner Herstellung anhand einer Ausführungsform näher erläutert. Dabei zeigen in prinzipieller und nicht maßstäblicher Darstellung die
- Fig. 1: eine stark schematisch vereinfacht und teils geschnitten gezeichnete Seitenansicht auf eine Vorrichtung zur Durchführung eines Verfahrens zwecks Erhalt des erfindungsgemäßen Verschlussteils;
- Fig. 2: in stark vergrößerter Darstellung einen Längsschnitt durch einen Formhohlraum gemäß der Darstellung nach der Fig. 1;
- Fig. 3: ein einzelnes Verschlusselement, wie es mit dem Formhohlraum nach der Fig. 2 herstellbar ist;
- Fig. 4: eine Unteransicht auf das Verschlusselement nach Fig. 3;
- Fig. 5: eine Draufsicht auf Verschlusselemente, von denen in der Fig. 3 ein einzelnes dargestellt ist.

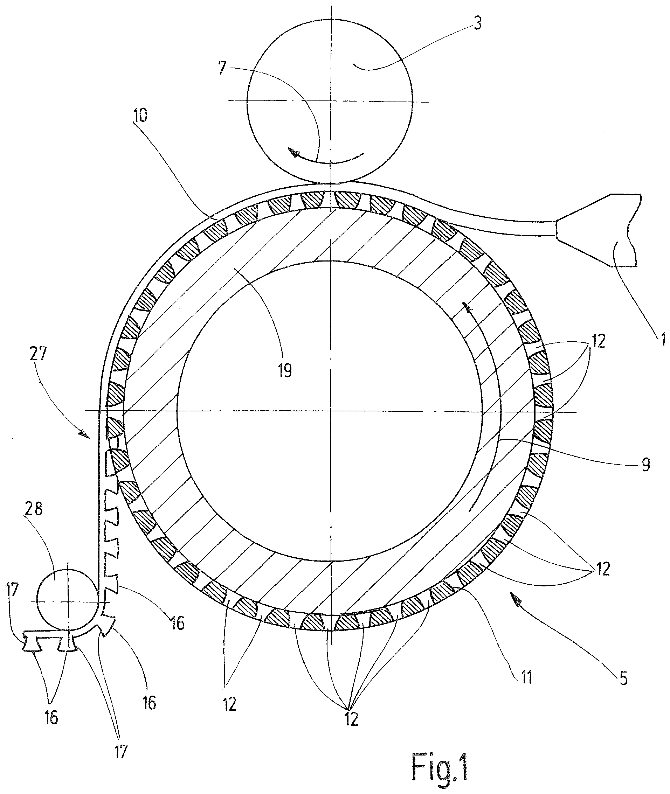

Fig. 1 zeigt in schematischer Darstellung Teile einer Vorrichtung zum Durchführen eines Herstellverfahrens zwecks Erhalt eines erfindungsgemäßen Verschlussteils. Die Vorrichtung weist einen Extruderkopf 1 auf als Zuführeinrichtung für in plastischem oder flüssigem Zustand befindlichen, insbesondere thermoplastischen Kunststoff, der als ein Band, dessen Breite derjenigen des herzustellenden Verschlussteils respektive Haftverschlussteils entspricht, dem Spalt zwischen einem Druckwerkzeug und einem Formwerkzeug zugeführt wird. Als Druckwerkzeug ist eine Druckwalze 3 vorgesehen, bei dem Formwerkzeug hingegen handelt es sich um eine als Ganzes mit 5 bezeichnete Formwalze. Beide Walzen sind in den in Fig. 1 mit Bogenpfeilen 7 und 9 angegebenen Drehrichtungen angetrieben, so dass zwischen ihnen ein Förderspalt gebildet wird, durch den das Kunststoffband in Transportrichtung gefördert wird, während gleichzeitig im Spalt als Formgebungszone das Kunststoffband zum Trägerteil 10 des Verschlussteils geformt wird und das Trägerteil 10 an der an der Formwalze 5 anliegenden Seite durch die formgebenden Elemente der Formwalze 5 die zur Bildung von Verschlusselementen erforderliche Formgebung erhält.

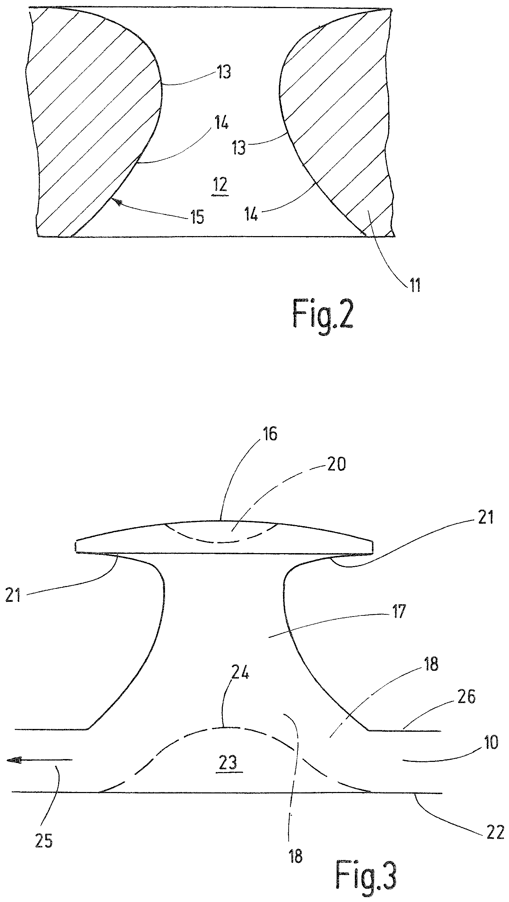

Zu diesem Zweck weist die Formwalze 5 am Umfang ein Sieb 11 auf mit einzelnen Formhohlräumen 12. Ein dahingehender Formhohlraum 12 ist beispielhaft in der Fig. 2 vergrößert dargestellt wiedergegeben. Des Weiteren sind die Formhohlräume 12, was nicht näher dargestellt ist, über die Formwalze 5 mit ihrem Sieb 11 außenumfangsseitig regelmäßig verteilt, wobei die Verteilung und die Anzahl frei wählbar sind.

Die Fig. 2 gibt einen Längsschnitt wieder durch den jeweils eingesetzten Formhohlraum 12, wobei die im Längsschnitt gegenüberliegenden Begrenzungswände 13 durchgehend mit einem konvexen Bahnverlauf 14 versehen sind. Es versteht sich, dass die genannten beiden Begrenzungswände 13 im Hinblick auf den rotationssymmetrischen Aufbau des Formhohlraums 12 dem Grunde nach nur Teil einer abschließenden Formgebungswand 15 sind, die durch das Siebmaterial 11 der Formwalze 5 begrenzt ist. Mit den dahingehenden Formhohlräumen 12 ist es jedenfalls möglich, Verschlusselemente herzustellen in Form jeweils eines mit einem Kopfteil 16 versehenen Stielteils 17, wobei Kopfteil 16, Stielteil 17 und gegenüberliegendes Trägerteil 10 einstückig ineinander übergehen. Die in Fig. 1 gezeigte Formvorrichtung erlaubt mithin das Herstellen des erfindungsgemäßen Verschlussteils im Rahmen eines Art Gieß- oder Extrusionsverfahrens, was fachsprachlich auch mit Chill-Roll-Herstellverfahren bezeichnet ist.

Wie die Fig. 2 des Weiteren zeigt, ist dabei die Krümmung des jeweiligen Bahnverlaufs 14 in Richtung des zu formenden Kopfteils 16 (in Blickrichtung auf die Fig. 2 gesehen, oberer Bereich) stärker ausgeführt als in Richtung eines Fußteiles 18, über das das Stielteil 17 mit dem Trägerteil 10 fuß- oder bodenseitig verbunden ist. Als besonders vorteilhaft, auch für das Ausformen des herzustellenden Verschlussteiles aus der Formvorrichtung, hat sich erwiesen, wenn man von der Längsrichtung des Stielteiles 17 aus in Richtung des Kopfteiles 16 gesehen den Bahnverlauf 14 mit seiner stärkeren Krümmung oberhalb der Mitte, vorzugsweise im oberen Drittel beginnend, vorsieht.

Zum Erhalt der angesprochenen Formhohlräume 12 mit ihrem rotationssymmetrischen Aufbau, in Form eines Hyperboloids, haben sich galvanische Beschichtungsverfahren erwiesen, bei dem zunächst ein zylindrischer Formhohlraum (nicht dargestellt) derart mit einem Beschichtungswerkstoff beschichtet wird, bis sich der konvexe Bahnverlauf 14 einstellt. Ferner ließe sich gegebenenfalls auch über ein Laser- oder Ätzverfahren der konvexe Bahnverlauf 14 aus einem Sieb- oder Gitter-Vollmaterial erzeugen.

Das in der Fig. 3 dargestellte einzelne Verschlusselement von dem sich eine Vielzahl auf einer Oberseite des Trägerteils 10 befinden, lässt sich mit dem vorstehend beschriebenen Verfahren unter Einbezug der Herstellvorrichtung nach der Fig. 1 erhalten. Der symmetrische Aufbau ergibt sich unmittelbar durch die Herstellung in einem Formhohlraum 12 nach der Fig. 2. Das dahingehende Verschlusselement kann geometrisch sehr klein aufbauend sein, beispielsweise nur eine Höhe von 0,4 mm aufweisen, mit einer Breite des Verschlusskopfes 16 in der Größenordnung von 0,6 mm. Der Querschnitt des Stielteils 17 beträgt bei dieser Ausführungsform ca. 0,25 mm. Demgegenüber lässt sich die Dicke des Trägerteils 10 noch geringer ausbilden, beispielsweise mit einer Dicke zwischen 0,05 mm und 2 mm. Die vorstehend genannten Größenabmessungen sind nur als Arbeitsbeispiel anzusehen; selbstverständlich besteht hier auch die Möglichkeit andersgeartete Größenverhältnisse zu realisieren.

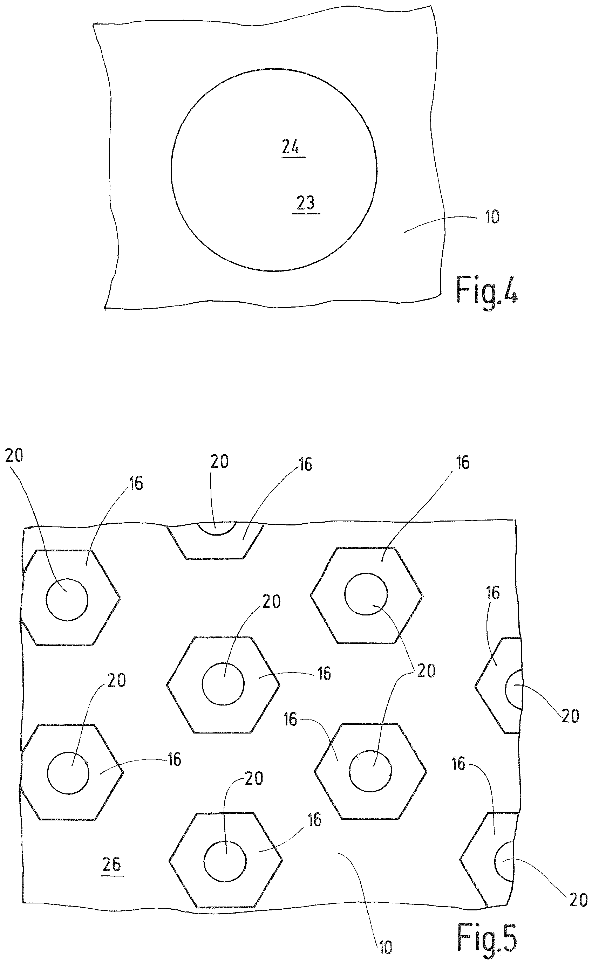

Ferner lässt sich gemäß der Darstellung nach der Fig. 5 eine Vielzahl solcher Verschlusselemente auf dem Trägerteil 10 anordnen. Die in Draufsicht vorhandene hexagonale Kopfform des Kopfteils 16 braucht nicht weiter nachbearbeitet zu werden. Anstelle der 6-Eckform für das jeweilige Kopfteil 16 lassen sich auch andere Kopfgeometrien ohne Weiteres mittels des beschriebenen Formgebungsverfahrens erreichen. Da das Sieb 11 sich auf einem massiven Formwalzenkörper 19 abstützt, findet ein Lufteinschluss zwischen der jeweiligen Kopfoberseite und der Außenumfangsseite des Walzenkörpers 19 statt mit der Folge, dass die Luft in Richtung der Mitte der Kopfoberseite verdrängt wird und dort eine kraterartige, von außen her gesehen, konvexe Ausnehmung oder Vertiefung 20 ausbildet, die zur Erhöhung der Steifigkeit zu den Rändern des Kopfteiles 16 mit beiträgt. Wie dargestellt, steht der Rand des jeweiligen Kopfteiles 16 über das Stielteil 17 randseitig über und bildet dergestalt eine umlaufende Unterhakungsmöglichkeit 21 aus für den Angriff eines Kopf- oder Schlaufenmaterials (nicht dargestellt) eines korrespondierenden Verschlussteiles, um dergestalt einen erneut öffen- und schließbaren Haftverschluss (Klettenhaftverschluss) zu schaffen. Im Bedarfsfall lassen sich auch andere Kopfgeometrien realisieren.

Wie sich des Weiteren aus der Fig. 2 ergibt, ist auf der dem Verschlusselement gegenüberliegenden weiteren Seite 22 des Trägerteils 10 eine weitere kraterartige Vertiefung 23 eingebracht, die in Unteransicht auf das Trägerteil 10 in der Fig. 4 exemplarisch wiedergegeben ist. Es versteht sich, dass im Hinblick auf die Vielzahl von Verschlusselementen auf dem Trägerteil 10 stehend, auch eine entsprechende Vielzahl weiterer kraterartiger Vertiefungen 23 im Trägerteil 10 vorhanden sind. Ansonsten verlaufen die Oberseite 26 und die Unterseite 22 des Trägerteils 10 planparallel zueinander.

Die jeweilige weitere kraterartige Vertiefung 23 verläuft, ausgehend von der eben verlaufenden weiteren Seite 22 des Trägerteils 10 von dort überstandsfrei aus, stetig bis zum Kratergrund 24. Die jeweilige weitere Vertiefung 23 geht in einem Längsschnitt gemäß der Darstellung nach der Fig. 3 gesehen, ausgehend von der weiteren Seite 22 des Trägerteils 10 von einem konvexen in einen konkaven Krümmungsverlauf in Richtung des Kratergrundes 24 über. Dabei hat es sich als herstelltechnisch günstig erwiesen, wenn der konkave Krümmungsverlauf im Bereich des Kratergrundes 24 weniger stark gekrümmt ist als der konvexe Verlauf. Es können aber auch je nach Prozessanforderung andere Bahn- und Krümmungsverläufe gewählt werden, wobei im vorliegenden Fall der Krümmungsverlauf von der Innenseite des Trägerteils 10 her gesehen ist.

Des Weiteren ist in Blickrichtung auf die Fig. 3 gesehen die jeweilige kraterartige Vertiefung 20 in einer Längsrichtung 25 des Trägerteils 10, die der Herstellrichtung entspricht im Längsquerschnitt gesehen auf einer Seite (hier in Blickrichtung auf die Fig. 3 gesehen, die rechte Seite) flacher ansteigend als auf der gegenüberliegenden Querschnittsseite (in Blickrichtung auf die Fig. 3 gesehen, linke Seite). Der einfacheren Darstellung wegen ist in Fig. 3 nicht zu sehen, dass bevorzugt die jeweilige weitere Vertiefung 23 eine maximale Kratertiefe aufweist, die zwischen 30 bis 60%, vorzugsweise bei etwa 50%, der Dicke des Trägerteils 10 liegt. Es zeigt jedoch insbesondere die Fig. 4, dass die jeweilige weitere kraterartige Vertiefung 23 mit ihrem Kratergrund 24 und mit ihrem sonstigen Kraterverlauf bis zum Kraterrand im Wesentlichen konzentrisch zu dem Stielteil 17 des jeweils pilzkopfartig ausgebildeten Verschlusselementes verläuft, das wie bereits ausgeführt benachbart gegenüberliegend zu dieser weiteren Vertiefung 23 auf dem Trägerteil 10 mit einem vorgebbaren Maß vorstehend mit diesem einstückig verbunden ist.

Vorzugsweise ist jedem Verschlusselement zugeordnet eine solche weitere kraterartige Vertiefung 23 vorhanden, wobei alle Verschlusselemente bevorzugt gleich ausgebildet sind, ebenso wie alle weiteren kraterartigen Vertiefungen 23 zueinander. Dies gilt auch entsprechend für die kopfseitige konvexe Ausnehmung 20 auf der Oberseite des jeweiligen Kopfteiles 16 eines Verschlusselementes. Wie insbesondere die Fig. 3 weiter zeigt, bildet das jeweilige Stielteil 17 eines Verschlusselementes zumindest an seiner fußseitigen Übergangsstelle in Form des Fußteils 18 zum Trägerteil 10 hin einen gleichförmig verlaufenden Rotationskörper aus, wobei die Übergangsstelle 18 eine geringere Krümmung aufweist als der Übergang des Stielteils 17 zur kopfseitigen Verbreiterung mit den Verhakungsstellen 21 des Verschlusselmentes. Ferner weist der Krümmungsverlauf des Stielteils 17 bevorzugt an jeder Stelle der benachbart gegenüberliegenden weiteren kraterartigen Vertiefungen 23 eine geringere Krümmung auf, als die Krümmung betreffend den kopfseitigen Krümmungsverlauf des Stielteils 17, um dergestalt eine besonders hohe Verhakungsfestigkeit für das erfindungsgemäße Verschlussteil zu erreichen. In diesem Zusammenhang ist es vorteilhaft, wenn die tiefste Stelle der konvexen kraterartigen Vertiefung 20 mit vorgebbarem axialem Abstand, gebildet durch die Länge des Stielteiles 17, der tiefsten Stelle der weiteren kraterartigen Vertiefung 23 insoweit gegenüberliegend angeordnet ist.

Wie sich weiter aus der Fig. 3 ergibt, ist der größte Durchmesser der weiteren kraterartigen Vertiefung 23 an der Stelle des Auslaufs zur weiteren Seite 22 des Trägerteils 10 größer bemessen als der Durchmesser des Stielteils an jeder Stelle zwischen seiner Fuß 18 - und seiner Kopfseite 16, vorzugsweise ist der Durchmesser der weiteren kraterartigen Vertiefung 23 größer als die Ausdehnung des Kopfteiles 16 an seiner breitesten Stelle (nicht dargestellt).

Als Kunststoffe für das Verschlussteil werden solche Materialien bevorzugt eingesetzt mit einer Reißdehnung größer 30% und die vorstehend angegebenen Größen- und Dickenabmessungen sind bevorzugt mit einem DM2000-Dickenmessgerät der Firma Wolff-Messtechnik gemessen. Neben den üblichen Kunststoffmaterialien zum Herstellen solcher Verschlussteile können auch biologisch abbaubare Werkstoffe in Frage kommen, die vorzugsweise auf der Basis nachwachsender oder petrochemischer Rohstoffe oder aus Kombinationen beider hergestellt werden können.

An der Stelle der Entformung 27 (vgl. Fig. 1), bei der das Verschlussteil aus den Formhohlräumen 12 des Siebes 11 entformt wird, ist insoweit das Verschlussteil noch in teilplastischem Zustand und noch nicht vollständig ausgehärtet. Die Unterhakungsmöglichkeiten 21 bleiben insoweit noch in der Kavität 15 des jeweiligen Formhohlraumes 12 (s. Fig. 2) kurzzeitig haften, so dass über das Stielteil 17 eine Längszugbewegung auf die untere weitere Seite 22 des Trägerteils 10 in Ansatz kommt mit der Folge, dass sich in den Boden des Trägerteils 10 muldenartige weitere Vertiefungen 23 nach innen gezogen werden. Anschließend kommt es nach dem Entformen aufgrund der Elastizität des Kunststoffmateriales zu einer Rückstellbewegung und das Verschlussteil nimmt mit seinem jeweiligen Verschlusselement die Form nach der Fig. 3 abschließend ein.

Eine andere Möglichkeit die weiteren krater- oder dellenartigen Vertiefungen 23 einzubringen, besteht darin, dass man entweder die Druckwalze 3 und/oder eine Entformungswalze 28 (s. Fig.1) mit außenumfangsseitig angebrachten Vorsprüngen (nicht dargestellt) versieht, die der Kontur der jeweils einzubingenden, weiteren kraterartigen Vertiefung 23 entsprechen und die dann über die Walzen 3, 28 entsprechend auf die Rückseite des Trägerteils 10 eingeprägt werden. Dergestalt kann die jeweilige weitere kraterartige Vertiefung 23 auch an anderer Stelle als in Verlängerung des Stielteils 17 im Trägerteil 10 eingebracht sein. Solche eingeprägten Vertiefungen lassen sich auch mit den weiteren kraterartigen Vertiefungen 23 kombinieren, wie sie beim beschriebenen Auszug des Verschlussteils aus den Formkavitäten der Formwalze 5 entstehen. Bei einer nicht näher dargestellten Ausführungsform besteht auch zusätzlich oder alternativ die Möglichkeit solche Vertiefungen auf der rückwärtigen Seite des Trägerteiles 10 mittels eines Düsenbalkens einzubringen, wobei mittels eines Druckmediums (Luft, Wasser) durch strahlartigen Auftrag die Vertiefungen in die weitere Seite 22 des Trägerteils 10 eingeprägt werden. Ferner besteht die Möglichkeit, was gleichfalls nicht dargestellt ist, mittels eines Ätz- oder sonstigen Abtragverfahrens die jeweilige weitere kraterartige Vertiefung 23 im Trägerteil 10 herzustellen.

## Patentansprüche

1. Verschlussteil bestehend aus zumindest einem flächenförmig ausgebildeten Trägerteil (10), auf dessen einer Seite eine Vielzahl von pilzkopfartigen Verschlusselementen angeordnet ist, die jeweils als einstückiger Bestandteil des Trägerteils (10) ein in der Art eines Rotationshyperboloids ausgebildetes entlang einer Längsachse verlaufendes, massives Stielteil (17) aufweisen, an dessen freies Ende sich ein Kopfteil (16) anschließt, das mit seinen Verhakungsmöglichkeiten bildenden Randbereichen zumindest teilweise über das Stielteil (17) vorsteht und eine kraterartige Vertiefung (20) auf seiner Oberseite aufweist, **dadurch gekennzeichnet, dass** auf der den Verschlusselementen gegenüberliegenden weiteren Seite (22) des Trägerteils (10) eine Vielzahl weiterer kraterartiger Vertiefungen (23) eingebracht ist, dass die beiden kraterartigen Vertiefungen (20, 23) zumindest bei einem Teil der Verschlusselemente konzentrisch oder im Wesentlichen konzentrisch zur Längsachse des jeweils zugeordneten Stielteils (17) verlaufen, und dass die jeweilige weitere kraterartige Vertiefung (23) eine maximale Kratertiefe aufweist, die zwischen 30-60%, vorzugsweise bei 50%, der Dicke des Trägerteils (10) liegt.

2. Verschlussteil nach Anspruch 1, **dadurch gekennzeichnet, dass** die jeweilige weitere kraterartige Vertiefung (23) ausgehend von der eben verlaufenden weiteren Seite (22) des Trägerteil (10) von dort überstandsfrei stetig bis zum Kratergrund (24) verläuft.

3. Verschlussteil nach Anspruch 1 oder 2, **dadurch gekennzeichnet, dass** die jeweilige weitere kraterartige Vertiefung (23) idealisiert in einem Längsquerschnitt gesehen, ausgehend von der weiteren Seite (22) des Trägerteils (10) von einem konvexen in einen konkaven Krümmungsverlauf in Richtung des Kratergrundes (24) übergeht.

4. Verschlussteil nach einem der vorstehenden Ansprüche, **dadurch gekennzeichnet, dass** der konkave Krümmungsverlauf weniger stark gekrümmt ist als der konvexe Verlauf.

5. Verschlussteil nach einem der vorstehenden Ansprüche, **dadurch gekennzeichnet, dass** die jeweilige weitere kraterartige Vertiefung (23) in einer Längsrichtung (25) des Trägerteils (10) gesehen, die der Herstellrichtung entspricht, wiederum im Längsquerschnitt gesehen auf einer Seite flacher in Richtung der weiteren Seite (22) des Trägerteils (10) ausläuft als auf der gegenüberliegenden Querschnittsseite.

6. Verschlussteil nach einem der vorstehenden Ansprüche, **dadurch gekennzeichnet, dass** jedem Verschlusselement zugeordnet eine weitere kraterartige Vertiefung (23) vorhanden ist und dass alle Verschlusselemente gleich ausgebildet sind, ebenso wie alle weiteren kraterartigen Vertiefungen (23) zueinander.

7. Verschlussteil nach einem der vorstehenden Ansprüche, **dadurch gekennzeichnet, dass** das jeweilige Stielteil (17) eines Verschlusselementes, zumindest an seiner fußseitigen Übergangsstelle (18) zum Trägerteil (10) den gleichförmig verlaufenden Rotationskörper ausbildet, die eine geringere Krümmung aufweist als der Übergang des Stielteils (17) zur kopfseitigen Verbreiterung (16) mit den Verhakungsstellen (21) des Verschlusselementes und dass der Krümmungsverlauf an jeder Stelle der benachbart gegenüberliegenden weiteren kraterartigen Vertiefungen (23) eine geringere Krümmung aufweist als die Krümmung betreffend den kopfseitigen Krümmungsverlauf des Stielteils (17).

8. Verschlussteil nach einem der vorstehenden Ansprüche, **dadurch gekennzeichnet, dass** der größte Durchmesser der weiteren kraterartigen Vertiefung (23) an der Stelle des Auslaufs zur weiteren Seite (22) des Trägerteils (10) größer bemessen ist als der Durchmesser des Stielteils (17) an jeder Stelle zwischen seiner Fuß (18)- und seiner Kopfseite (16), vorzugsweise größer ist als die Ausdehnung des Kopfteiles (16) an seiner breitesten Stelle.

9. Verschlussteil nach einem der vorstehenden Ansprüche, **dadurch gekennzeichnet, dass** in die weitere kraterartige Vertiefung (23) ein Klebstoffmittel eingebracht ist.

## Claims

1. A fastener part consisting of at least one planar substrate part (10), on one side of which a plurality of mushroom-head-like fastener elements are arranged, each of which, as an integral part of the substrate part (10), has a solid stem part (17) formed in the manner of a rotational hyperboloid and extending along a longitudinal axis, wherein to the free end of said stem part (17) a head part (16) adjoins, the edge regions of which form hooking possibilities and project at least partially beyond the stem part (17), and wherein said head part (16) has a crater-like depression (20) on its upper side, **characterized in that** a plurality of further crater-like depressions (23) is incorporated into the further side (22) of the substrate part (10), opposite to the fastener elements, **in that** both crater-like depressions (20, 23) of at least some of the fastener elements extend concentrically or mainly concentrically to the longitudinal axis of the respective assigned stem part (17), and **in that** the respective further crater-like depression (23) has a maximum crater depth ranging between 30 to 60%, preferably 50%, of the thickness of the substrate part (10).

2. The fastener part according to claim 1, **characterized in that** the respective further crater-like depression (23), starting from the plane further side (22) of the substrate part (10), extends continuously from there without protrusion to the crater base (24).

3. The fastener part according to claim 1 or 2, **characterized in that** the respective further crater-like depression (23), as viewed idealized in a longitudinal cross section, transitions starting from the further side (22) of the substrate part (10) from a convex into a concave course of curvature in the direction of the crater base (24).

4. The fastener part according to any one of the preceding claims, **characterized in that** the concave course of curvature is less strongly bent than the convex course.

5. The fastener part according to any one of the preceding claims, **characterized in that** the respective further crater-like depression (23), viewed in a longitudinal direction (25) of the substrate part (10) corresponding to the direction of manufacture, in turn, viewed in longitudinal cross section runs off more flatly on one side towards the further side (22) of the substrate part (10) than on the opposite cross-sectional side.

6. The fastener part according to any one of the preceding claims, **characterized in that** a further crater-like depression (23) is provided assigned to every fastener element and that all fastener elements are of identical design, as are all further crater-like depressions (23) with respect to one another.

7. The fastener part according to any one of the preceding claims, **characterized in that** the respective stem part (17) of a fastener element at least at its foot-sided transition point (18) towards the substrate part (10) forms the uniformly extending rotational body, wherein said transition point (18) has a smaller curvature than the transition of the stem part (17) to the head-sided widening (16) having the hooking points (21) of the fastener element, and **in that** the course of curvature at every location of the adjacent and opposite further crater-like depressions (23) has a smaller curvature than the curvature relating to the head-sided course of curvature of the stem part (17).

8. The fastener part according to any one of the preceding claims, **characterized in that** the largest diameter of the further crater-like depression (23) at the point of expiring to the further side (22) of the substrate part (10) is larger than the diameter of the stem part (17) at any point between its foot end (18) and its head end (16), preferably larger than the extension of the head part (16) at its widest point.

9. The fastener part according to any one of the preceding claims, **characterized in that** an adhesive agent is introduced into the further crater-like depression (23).

## Revendications

1. Partie de fermeture constituée d'au moins une pièce de support (10) de réalisation aplatie, sur l'une des faces de laquelle est implantée une pluralité d'éléments obturateurs du type tête de champignon respectivement munis, en tant que composant monobloc de ladite pièce de support (10), d'une pièce massive (17) formant fût, conçue à la manière d'un hyperboloïde de révolution, s'étendant le long d'un axe longitudinal, et à l'extrémité libre de laquelle se rattache une pièce (16) formant tête qui fait au moins partiellement saillie au-delà de ladite pièce (17) formant fût, par ses régions marginales conférant des facultés d'accrochage, et est dotée d'un renfoncement (20) du type cratère sur sa face supérieure,
**caractérisée par le fait qu'**une pluralité de renfoncements supplémentaires (23) du type cratère est façonnée sur l'autre face (22) de la pièce de support (10), tournée à l'opposé des éléments obturateurs ; **par le fait que** les deux renfoncements (20, 23) du type cratère s'étendent, concernant au moins une partie desdits éléments obturateurs, concentriquement ou pour l'essentiel concentriquement à l'axe longitudinal de la pièce (17) formant fût, respectivement associée ; et **par le fait que** le renfoncement supplémentaire (23) considéré, du type cratère, présente une profondeur maximale comprise entre 30-60 %, préférentiellement de l'ordre de 50 % de l'épaisseur de ladite pièce de support (10).

2. Partie de fermeture selon la revendication 1, **caractérisée par le fait que** le renfoncement supplémentaire (23) considéré, du type cratère, s'étend de manière continue jusqu'au fond (24) du cratère à partir de l'autre face (22) de la pièce de support (10) à étendue plane, sans débord au-delà de cette dernière.

3. Partie de fermeture selon la revendication 1 ou 2, **caractérisée par le fait que**, virtuellement observé en coupe longitudinale, le renfoncement supplémentaire (23) considéré, du type cratère, fusionne d'un profil à courbure convexe à un profil à courbure concave, en direction du fond (24) du cratère, à partir de l'autre face (22) de la pièce de support (10).

4. Partie de fermeture selon l'une des revendications précédentes, **caractérisée par le fait que** le profil à courbure concave présente une courbure moins accentuée que celle du profil convexe.

5. Partie de fermeture selon l'une des revendications précédentes, **caractérisée par le fait que**, lorsqu'il est observé dans la direction longitudinale (25) de la pièce de support (10) correspondant à la direction de fabrication, le renfoncement supplémentaire (23) considéré du type cratère, observé de nouveau en coupe longitudinale, s'achève d'un côté, en direction de l'autre face (22) de la pièce de support (10), d'une manière plus aplatie que du côté opposé en coupe transversale.

6. Partie de fermeture selon l'une des revendications précédentes, **caractérisée par** la présence d'un renfoncement supplémentaire (23) du type cratère, associé à chaque élément obturateur ; et par le fait que tous les éléments obturateurs sont de réalisation identique, de même que tous les renfoncements supplémentaires (23) du type cratère, les uns par rapport aux autres.

7. Partie de fermeture selon l'une des revendications précédentes, **caractérisée par le fait que** la pièce respective (17) formant fût d'un élément obturateur matérialise, au moins au niveau de sa zone de base (18) procurant transition avec la pièce de support (10), le corps de révolution au tracé uniforme qui présente une courbure moindre que celle de la transition de ladite pièce (17) formant fût avec l'élargissement (16) situé côté tête et pourvu des zones d'accrochage (21) ; et **par le fait que** le profil de courbure présente, au niveau de chaque zone des renfoncements supplémentaires (23) du type cratère occupant des emplacements voisins opposés, une courbure moindre que la courbure relative au profil de courbure situé côté tête de ladite pièce (17) formant fût.

8. Partie de fermeture selon l'une des revendications précédentes, **caractérisée par le fait que** le diamètre maximal du renfoncement supplémentaire (23) du type cratère présente, au niveau de la zone d'achèvement gagnant l'autre face (22) de la pièce de support (10), un dimensionnement supérieur à celui du diamètre de la pièce (17) formant fût, au niveau de chaque zone située entre le côté de sa base (18) et son côté tête (16), de préférence supérieur à l'étendue dudit côté tête (16) au niveau de sa zone la plus large.

9. Partie de fermeture selon l'une des revendications précédentes, **caractérisée par le fait qu'**un agent adhésif est intégré dans le renfoncement supplémentaire (23) du type cratère.
